# EUROPÄISCHE PATENTSCHRIFT

(11) **EP 3 782 455 B1**
(45) Veröffentlichungstag und Bekanntmachung des Hinweises auf die Patenterteilung: **16.08.2023**
(21) Anmeldenummer: 20175339.9
(22) Anmeldetag: 19.05.2020
(51) Int. Cl.: A01F 12/44

(54) **MÄHDRESCHER**
COMBINE HARVESTER
MOISSONNEUSE-BATTEUSE

(30) Priorität: 23.08.2019 DE 102019122763
(43) Veröffentlichungstag der Anmeldung: 24.02.2021
(73) Patentinhaber: CLAAS Selbstfahrende Erntemaschinen GmbH, 33428 Harsewinkel (DE)
(72) Erfinder: Sprigade, Daniel, 59427 Unna (DE); Neitemeier, Dennis, 59510 Lippetal (DE)
(74) Vertreter: CLAAS Gruppe

(56) Entgegenhaltungen:
- EP-A1- 1 712 122
- DE-A1-102009 000 797

## Beschreibung

Die vorliegende Erfindung betrifft einen Mähdrescher gemäß dem Oberbegriff des Anspruches 1. Weiterhin betrifft die vorliegende Erfindung ein Verfahren zum Betreiben eines Mähdreschers gemäß dem Oberbegriff des Anspruches 13.

Aus der DE 10 2009 000 797 A1 ist ein Mähdrescher sowie ein Verfahren zum Betreiben eines Mähdreschers der eingangs genannte Art bekannt. Der Mähdrescher umfasst eine Reinigungsvorrichtung mit einem oszillierend angetriebenen Sieb. Das Sieb ist in einen Siebkasten angeordnet und bildet eine flächige Förderebene aus. Der Siebkasten ist pendelnd am Maschinenrahmen aufgehängt und durch Antriebsmittel oszillierend angetriebenen. Die Antriebsmittel setzen sich aus einer Welle, die um eine horizontale Drehachse in Rotation versetzbar ist, und einer durch eine Koppelstange exzentrisch an der Welle befestigten Masse zusammen. Die Welle ist an Lagern gelagert, welche mittels Streben starr mit dem Siebkasten verbunden ist. Der Siebkasten ist über vordere und hintere Pendellagerungen frei pendelnd am Maschinenrahmen des Mähdreschers aufgehängt und wird in Stützlagern frei verschiebbar am Maschinenrahmen gehaltert, so dass er sich in alle drei Richtungen, horizontal in Vorwärtsrichtung, in seitlicher Richtung und in vertikaler Richtung, innerhalb vorgegebener Grenzen frei bewegen kann. Die Welle wird durch eine flexible Welle vom Verbrennungsmotor des Mähdreschers in Drehung versetzt. Die mechanische Kopplung gestattet nur geringe Verstellmöglichkeiten. Insbesondere ist durch die direkte Verbindung der Welle mit dem Verbrennungsmotor die Schwingfrequenz fest an die Drehzahl des Verbrennungsmotors gekoppelt, wodurch eine Regelung nicht oder nur eingeschränkt möglich ist. Diese Begrenzung führt dazu, dass sich ein nahezu unveränderlicher Arbeitspunkt bezüglich Wurfhöhe und Wurfrichtung einstellt.

Das Dokument EP 1 712 122 A1 offenbart einen Mähdrescher nach dem Oberbegriff des Anspruchs 1.

Ausgehend vom vorstehend beschriebenen Stand der Technik liegt der Erfindung die Aufgabe zugrunde, einen Mähdrescher sowie ein Verfahren zum Betreiben eines Mähdreschers der eingangs genannten Art derart weiterzubilden, dass eine verbesserte Anpassung der Ansteuerung einer oszillierend angetriebenen Fördervorrichtung erreicht wird.

Diese Aufgabe wird erfindungsgemäß durch einen Mähdrescher mit den Merkmalen des Anspruches 1 gelöst. Weiterhin wird die Aufgabe durch ein Verfahren zum Betreiben eines Mähdreschers mit den Merkmalen des Anspruches 13 gelöst.

Vorteilhafte Weiterbildungen sind Gegenstand der Unteransprüche.

Gemäß dem Anspruch 1 wird ein Mähdrescher vorgeschlagen, mit zumindest einer oszillierend angetriebenen Fördervorrichtung, welche einen Rahmen, in dem zumindest eine im Wesentlichen flächige Förderebene angeordnet ist, umfasst, wobei der Rahmen am Maschinenrahmen des Mähdreschers aufgehängt und durch wenigstens ein Antriebsmittel oszillierend angetriebenen ist. Das Antriebsmittel ist als zumindest ein Elektromotor mit einstellbarer variabler Frequenz ausgeführt, wobei der Rahmen an einem Läufer des zumindest einen Elektromotors um eine Achse drehbar angeordnet ist, wobei der Läufer eine oszillierende Linearbewegung ausführt, und das zur Ansteuerung des zumindest einen Elektromotors eine Steuereinheit vorgesehen ist.

Der zumindest eine Elektromotor weist jeweils einen Stator auf. Erfindungsgemäß greift an dem oder einem den Stator umgebenden Motorgehäuse eine Stelleinheit an, welche dazu eingerichtet ist, den zumindest einen Elektromotor relativ zum Maschinenrahmen um eine Drehachse zu drehen.

Hierdurch wird erreicht, dass die Schwingfrequenz unabhängig von der Drehzahl des Verbrennungsmotors frei gewählt werden kann und auch bei sich ändernder Drehzahl, bspw. bei einer Lastdrückung, ein konstanter Arbeitspunkt erhalten bleibt. Die um die Achse drehbare Anordnung des Rahmens an dem Läufer erhöht die Anzahl der unabhängigen Bewegungsmöglichkeiten, um den Rahmen und dessen Förderebene oszillierend anzutreiben.

Insbesondere kann die Steuereinheit zur Ansteuerung des zumindest einen von wenigstens einer Wechselspannungsquelle gespeisten Elektromotors in Abhängigkeit von Frequenz und/oder Amplitude eingerichtet sein. Mittels der Steuereinheit und des einprägenden Stroms können die Wurfweite, die Wurfhöhe sowie die Frequenz, mit der die Fördervorrichtung schwingt, frei vorgegeben werden. Die Wechselspannungsquelle ist vorzugsweise als Generator mit mehreren Phasen ausgeführt. Vorzugsweise ist der Elektromotor an eine Phase des Generators oder zwischen zwei Phasen des Generators angeschlossen. Die Oszillationsfrequenz ist unter anderem von der Frequenz abhängig, mit welcher der Wechselstrom invertiert wird. Durch eine Änderung der Stromstärke kann die Oszillationsgeschwindigkeit und/oder eine Oszillationsamplitude der Fördervorrichtung verändert werden.

Um den Läufer des als Linearmotor ausgeführten Elektromotors exakt in Richtung eines ihn führenden Kanals anzutreiben, sollte ein Stator des Elektromotors wenigstens ein Paar von Polschuhen umfassen, die einander an zwei Seiten des Kanals orthogonal zur Bewegungsrichtung des Läufers gegenüberliegen. Diese Polschuhe können zu einem gleichen Joch gehören, das sich hufeisenförmig um den Kanal erstreckt. Ein günstigeres Verhältnis von Antriebsleistung zu Masse des Elektromotors kann erreicht werden, wenn der Ständer wenigstens ein zweites Paar von Polschuhen umfasst, wobei jeweils ein erster Polschuh jedes Paares zu einem an einer ersten Seite des Kanals angeordneten ersten Joch und der zweite Polschuh zu einem an der anderen Seite des Kanals angeordneten zweiten Joch gehört. Eine Spule kann hier um einen sich in Bewegungsrichtung des Läufers erstreckenden Abschnitt wenigstens eines der Joche herum angeordnet sein. Um die Effizienz des Elektromotors weiter zu verbessern, kann der Ständer ein drittes Paar von Polschuhen umfassen, die zwischen dem ersten und dem zweiten Paar von Polschuhen angeordnet sind. Die Joche umfassen jeweils einen sich zwischen den Polschuhen des ersten und des zweiten Paars erstreckenden Bügel und einen von dem Bügel abzweigenden, den Polschuh des dritten Paars tragenden Arm, wobei eine Spule um diesen Arm herum angeordnet ist.

Der Läufer kann vorzugsweise wenigstens eine Spule umfassen, deren Achse parallel zu einem zwischen den Polschuhen eines Paars bestehenden Magnetfeld ausgerichtet ist.

Insbesondere kann der zumindest eine Elektromotor relativ zum Rahmen um eine Drehachse drehbar am Maschinenrahmen gelagert sein. Der Elektromotor weist einen Stator auf, mit welchem der Elektromotor an dem Maschinenrahmen drehbar gelagert sein kann. Der Stator kann von einem Motorgehäuse umgeben sein. Der Elektromotor kann durch eine Stelleinheit um die Drehachse schwenkbar sein. Durch die drehbare Lagerung des zumindest einen Elektromotors kann die Schwingrichtung frei gewählt werden.

Dabei kann die Drehachse im Wesentlichen orthogonal zum Maschinenrahmen und quer zur Fahrrichtung des Mähdreschers orientiert sein.

Bevorzugt sollten an dem Rahmen der zumindest einen Fördervorrichtung beidseitig jeweils zwei Elektromotoren angeordnet sein. Die Elektromotoren sind dabei bevorzugt, in Längsrichtung der Fördervorrichtung gesehen, in jeweiligen den vorderen bzw. hinteren Endbereichen angeordnet.

Gemäß einer bevorzugten Weiterbildung können die paarweise an dem Rahmen angeordneten Elektromotoren um eine zur Längsachse der Fördervorrichtung parallel verlaufende Schwenkachse verlagerbar sein. Durch den Anteil der Schwingungen, die quer zur Fahrrichtung verlaufen, kann eine Neigung des Mähdreschers bezüglich seiner Längsachse, wie sie bei einer Hangfahrt auftreten kann, kompensiert werden.

Dabei kann zur Verlagerung der Position der Elektromotoren relativ zum Maschinenrahmen eine Aktuatorik vorgesehen sein. Die Aktuatorik kann hydraulisch, pneumatisch oder elektrisch betätigbar sein.

Des Weiteren kann die Steuereinheit zur paarweisen Ansteuerung der an jeweils einer Seite des Rahmens angeordneten Elektromotoren eingerichtet sein. Dadurch können die paarweise an dem Förderboden angeordneten Elektromotoren derart angesteuert werden, dass die an einer Seite des Förderbodens angeordneten Elektromotoren mit einer anderen Amplituden schwingen, als die auf der gegenüberliegenden Seite des Förderbodens angeordneten Elektromotoren. Insbesondere kann hierdurch auf eine Verlagerung der Elektromotoren relativ zum Maschinenrahmen durch eine Aktuatorik verzichtet werden.

Weiter bevorzugt kann die Steuereinheit dazu eingerichtet sein, Elektromotoren, welche die jeweiligen Rahmen von verschiedenen Fördervorrichtungen oszillierend antreiben, fördervorrichtungsspezifisch und unabhängig voneinander anzusteuern. Insbesondere bei mehr als einer in dem Mähdrescher angeordneten Fördervorrichtung kann jede Fördervorrichtung mit einer eigenen Frequenz, eigener Amplitude und /oder eigener Richtung schwingen.

Insbesondere kann die zumindest eine Fördervorrichtung als Vorbereitungsboden, als Rücklaufboden und/oder als Siebvorrichtung einer Reinigungsanordnung ausgeführt sein. Die voneinander unabhängige Ansteuerung der Elektromotoren der unterschiedlichen Fördervorrichtungen kann aufeinander abgestimmt erfolgen, so dass sich die Gesamtschwingung im System minimieren lässt. Dazu können die unterschiedlichen Fördervorrichtungen mit gegensinnigen Schwingungen angeregt werden.

Des Weiteren wird die eingangs gestellte Aufgabe durch ein Verfahren zum Betreiben eines Mähdreschers mit den Merkmalen des nebengeordneten Anspruches 13 gelöst.

Gemäß dem Anspruch 13 wir ein Verfahren zum Betreiben eines Mähdrescher mit zumindest einer oszillierend angetriebenen Fördervorrichtung vorgeschlagen, wobei die Fördervorrichtung einen Rahmen, in dem zumindest eine im Wesentlichen flächige Förderebene angeordnet ist, umfasst, wobei der Rahmen pendelnd am Maschinenrahmen des Mähdreschers aufgehängt ist und durch Antriebsmittel oszillierend angetriebenen wird, wobei der Rahmen von zumindest einem als Elektromotor ausgeführten Antriebsmittel mit einstellbarer Frequenz in Schwingung versetzt wird, wobei der Elektromotor durch eine Steuereinheit angesteuert wird.

Weiterhin kann der Rahmen von einem an dem Rahmen schwenkbar angelenkten Läufer des zumindest einen Elektromotors in Schwingung versetzt werden.

Insbesondere kann der Elektromotor durch eine Stelleinheit um die Drehachse geschwenkt werden. Durch die drehbare Lagerung des zumindest einen Elektromotors kann die Schwingrichtung frei gewählt werden. Die Stelleinheit kann zur Anpassung der Schwingrichtung durch die Steuereinheit angesteuert werden.

Gemäß einer bevorzugten Weiterbildung kann die Position einer zur Förderrichtung querverlaufenden, waagerechten Drehachse an dem Maschinenrahmen, an der zumindest eine Elektromotor drehbar angelenkt ist, mittels einer Aktuatorik senkrecht zur Fahrrichtung in Abhängigkeit von einer Seitenneigung des Mähdreschers verändert werden.

Weiter bevorzugt können die Elektromotoren, welche die jeweiligen Rahmen von verschiedenen Fördervorrichtungen oszillierend antreiben, fördervorrichtungsspezifisch und unabhängig voneinander von der Steuereinheit angesteuert werden. Insbesondere bei mehr als einer in dem Mähdrescher angeordneten Fördervorrichtung kann jede Fördervorrichtung mit eigener Frequenz, Amplitude und /oder Richtung schwingen.

Weiterhin kann die zumindest eine Fördervorrichtung als Vorbereitungsboden, als Rücklaufboden und/oder als Siebvorrichtung einer Reinigungsanordnung ausgeführt sein. Die voneinander unabhängige Ansteuerung der Elektromotoren der unterschiedlichen Fördervorrichtungen kann aufeinander abgestimmt erfolgen, so dass sich die Gesamtschwingung im System minimieren lässt. Dazu können die unterschiedlichen Fördervorrichtungen mit gegensinnigen Schwingungen angeregt werden. Dies kann durch ein Wechselspannungsnetz mit zumindest zwei Phasen erreicht werden. Hierzu kann zumindest eine als Generator ausgebildete Wechselspannungsquelle mit zumindest zwei Phasen vorgesehen sein. Die zumindest Wechselspannungsquelle stellt die Wechselspannung für die zumindest zwei Phasen des Wechselspannungsnetzes zur Verfügung. Vorzugsweise ist der Generator ein Drehstromgenerator. Der Generator generiert zueinander phasenversetzte Wechselspannungen an den Phasen. Dabei können entsprechen die Phasen im Wechselspannungsnetz vorzugsweise den Phasen des Generators entsprechen. Vorzugsweise können die paarweise an einer Seite des Rahmens einer Fördervorrichtung angeordneten Elektromotoren an jeweils eine Phase des Generators angeschlossen sein. Weiterhin können mehr als zwei Phasen vorgesehen sein, so dass der zumindest eine Elektromotor, vorzugsweise bis zu vier Elektromotoren, der jeweiligen Fördervorrichtung mit zumindest einer Phase unabhängig angesteuert werden.

Die vorliegende Erfindung wird nachstehend anhand eines in den Zeichnungen dargestellten Ausführungsbeispieles näher erläutert.

Es zeigen:
- Fig. 1: eine schematische Seitenansicht eines Mähdreschers;
- Fig. 2: eine schematische Darstellung einer als Sieb ausgebildeten Fördervorrichtung des Mähdreschers;
- Fig. 3: eine schematische Darstellung eines Antriebsmittels der Fördervorrichtung; und
- Fig. 4: eine Schnittansicht durch das als Elektromotor ausgeführte Antriebsmittel.

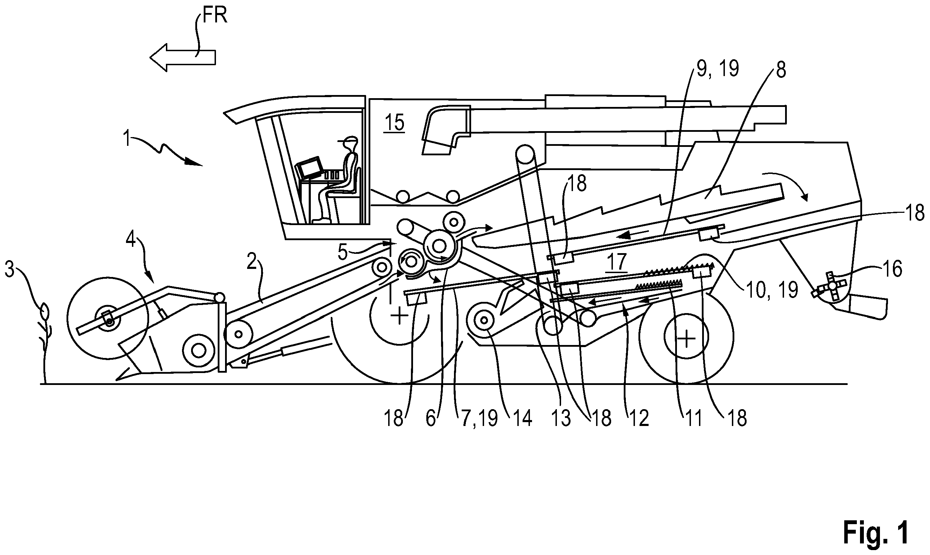

Der in Fig. 1 gezeigte Mähdrescher 1 trägt am vorderen Ende eines Schrägförderers 2 einen austauschbaren, für die Art eines abzuerntenden Erntegutes 3 spezifisches Vorsatzgerät 4. Das von dem Vorsatzgerät 4 geschnittene Erntegut 3 wird durch den Schrägförderer 2 einem Dreschwerk 5 zugeführt. Das Dreschwerk 5 scheidet einerseits über zumindest einen Dreschkorb 6 einen überwiegend Kornbestandteile enthaltenden Gutstrom auf einen Vorbereitungsboden 7 aus. Zum anderen wird ein im Wesentlichen Stroh und andere Nichtkornbestandteile enthaltender Gutstrom an eine Abscheidevorrichtung 8, die im dargestellten Ausführungsbeispiel als ein Hordenschüttler ausgeführt ist, abgegeben. Aus diesem Gutstrom werden von der Abscheidevorrichtung 8 noch Körner abgetrennt und über einen oszillierend angetriebenen Rücklaufboden 9 mit dem von dem Dreschwerk 5 abgeschiedenen Korn auf einem unterhalb des Dreschkorbs 6 angeordneten oszillierend angetriebenen Vorbereitungsboden 7 zusammengeführt. Von dort gelangen die Körner auf ein Sieb 10 einer Reinigungsvorrichtung 12.

Einer alternativen Bauform des Mähdreschers 1 zufolge kann anstelle der als Hordenschüttlers ausgeführten Abscheidevorrichtung 8 zumindest ein Axialrotor zur Trennung von Korn und Nichtkornbestandteilen vorgesehen sein.

Das Sieb 10, wegen seiner Positionierung auch als Obersieb bezeichnet, umfasst teilweise miteinander überlappende Segmente, die gegeneinander beweglich sind, um die Größe von zwischen den Segmenten gebildeten Löchern an die Korngröße des Ernteguts anzupassen, so dass die Körner durch das Obersieb 10 hindurch auf ein Untersieb 11 fallen können. Das Untersieb 11 weist in gleicher Weise wie das Obersieb 10 größenverstellbare Öffnungen zwischen gegeneinander verstellbaren Segmenten auf. Korn, das die Öffnungen beider Siebe 10, 11 passiert hat, wird von einem sich unter den Sieben 10, 11 erstreckenden Boden aufgefangen und gelangt zu einer Förderschnecke 13, die es in einen Korntank 15 fördert.

Die Siebe 10, 11 führen eine Schwingbewegung aus, durch die auf ihnen liegendes Erntegut hochgeworfen, aufgelockert und zum Heck des Mähdreschers 1 hin gefördert wird und gleichzeitig leichte Nichtkornbestandteile des Ernteguts vom Luftstrom eines Gebläses 14 weggetragen und über eine Häcksel- und Verteilereinrichtung 16 am Heck des Mähdreschers 1 ausgeschieden werden.

Der Vorbereitungsboden 7, der Rücklaufboden 9 als auch die Siebe 10. 11 der Reinigungsvorrichtung 12 sind oszillierend angetriebene Fördervorrichtungen 19, welche einen Rahmen 20, in dem zumindest eine im Wesentlichen flächige Förderebene 21 angeordnet ist, umfassen, wobei der Rahmen 20 am Maschinenrahmen 17 aufgehängt und durch wenigstens ein Antriebsmittel 18 oszillierend angetriebenen ist, wie in Fig. 1 schematisch angedeutet ist.

Mit Bezugszeichen FR ist eine Fahrtrichtung des Mähdreschers 1 bezeichnet.

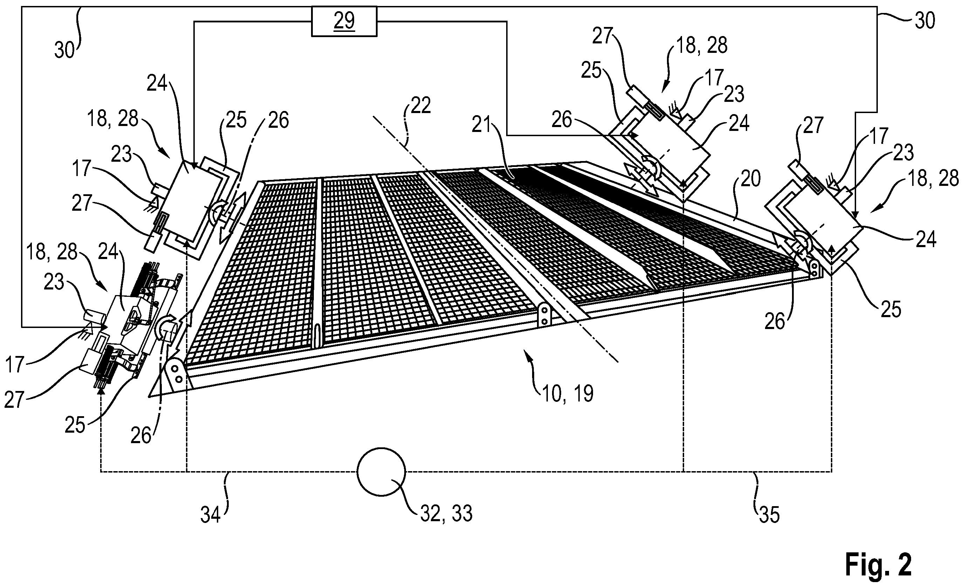

Fig. 2 zeigt eine schematische Darstellung der beispielhaft als Obersieb 10 ausgebildeten Fördervorrichtung 19. Die Fördervorrichtung 19 weist einen Rahmen 20 auf, der eine im Wesentlichen flächige Förderebene 21 umschließt. Eine Vergleichbare Ausgestaltung ist für den Vorbereitungsboden 7 als auch den Rücklaufboden 9 denkbar. Die flächige Förderebene 21 im Fall des Obersiebs 10 ist als zumindest ein Lamellensieb mit verstellbarer Öffnungsweise ausgebildet.

Im Wesentlichen parallel zur Längsachse 22 der Fördervorrichtung 19 sind beidseitig an dem Rahmen 20 paarweise Antriebsmittel 18 angeordnet. Die schematisch dargestellten Antriebsmittel 18 sind als baugleiche Elektromotoren 28 ausgeführt. Das jeweilige Antriebsmittel 18 ist um eine Drehachse 23 drehbar an dem Maschinenrahmen 17 gelagert. Die Elektromotoren 28 weisen jeweils einen Stator 24 sowie einen eine oszillierende Linearbewegung ausführenden Läufer 25 auf. An jedem Stator 24 oder einem den Stator 24 umgebenden Motorgehäuse greift eine Stelleinheit 27 an, welche dazu eingerichtet ist, den jeweiligen Elektromotor 28 relativ zum Maschinenrahmen 17 um die Drehachse 23 zu drehen. Der Rahmen 20 ist um eine Achse 26 drehbar an dem jeweiligen Läufer 25 angeordnet. Neben einer oszillierenden Bewegung in Längsrichtung des Rahmens 20, welche die Wurfweite von auf der Förderebene 21 befindlichem Erntegut beeinflusst, lässt sich durch die drehbare Anordnung des Rahmens 20 an den Läufern 25 zusätzlich eine Neigung einstellen, welche die Wurfhöhe beeinflusst. Durch die drehbare Lagerung des zumindest einen Elektromotors 28 kann zudem die Schwingrichtung frei gewählt werden.

Jeder Elektromotor 28 sowie die diesem zugeordnete Stelleinheit 27 ist mit einer Steuereinheit 29 signaltechnisch zur Übertragung von Steuerbefehlen verbunden. Hierzu können die Elektromotoren 28 und die jeweilige Stelleinheit 27 durch ein Bussystem 30 mit der Steuereinheit 29 in Verbindung stehen.

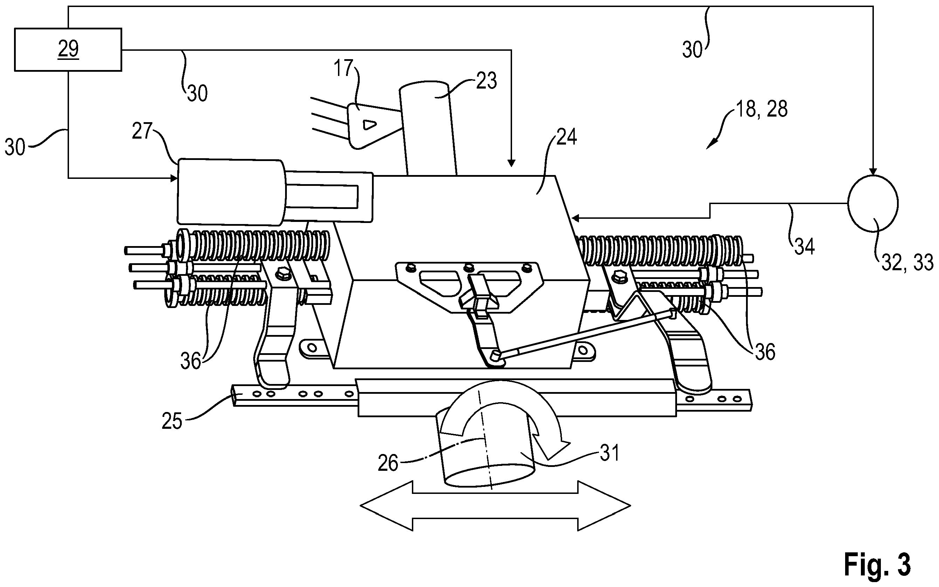

In Fig. 3 ist eine schematische Darstellung des Antriebsmittels 18 der Fördervorrichtung 19 gezeigt. Jeder als Linearantrieb ausgeführte Elektromotor 28 umfasst einen Stator 24 und einen Läufer 25. Der Läufer 20 weist eine Lagerstelle 31 auf, beispielsweise in Form einer Gleitlagerbuchse, in welcher der Rahmen 20 um die Achse 26 drehbar gelagert ist. Der Stator 24 und der Läufer 25 sind als Magneten ausgeführt, wobei mindestens einer von Ihnen als ein Elektromagnet ausgebildet ist.

Der Mähdrescher 1 weist ein Wechselspannungsnetz mit zumindest zwei Phasen auf. Hierzu ist eine als Generator 32 ausgebildete Wechselspannungsquelle 33 mit zumindest zwei Phasen 34, 35 vorgesehen. Die Wechselspannungsquelle 33 stellt die Wechselspannung für die zumindest zwei Phasen des Wechselspannungsnetzes zur Verfügung. Die als Generator 32 ausgebildete Wechselspannungsquelle 33 ist mit der Steuereinheit 29 durch das Bussystem 30 signaltechnisch verbunden. Vorzugsweise ist der Generator 32 ein an sich bekannter und daher nicht weiter erläuterter Drehstromgenerator. Der Generator 32 generiert zueinander phasenversetzte Wechselspannungen an den Phasen 34, 35. Dabei entsprechen die Phasen im Wechselspannungsnetz vorzugsweise den Phasen 34, 35 des Generators 32. Vorzugsweise sind die paarweise an einer Seite des Rahmens 20 angeordneten Elektromotoren 28 an jeweils eine Phase 34 bzw. 35 des Generators 32 des Generators 32 angeschlossen. Denkbar ist auch, dass die Wechselspannungsquelle 33 vier Phasen bereitstellt. Der Generator 32 kann zueinander phasenversetzte Wechselspannungen an den Phasen generieren, so dass jeder Elektromotoren 28 an jeweils einer Phase des Generators 32 oder zwischen zwei Phasen des Generators 32 angeschlossen ist. Der Generator 32 kann durch einen Fahrzeugantrieb 34, zum Beispiel eine Verbrennungskraftmaschine, angetrieben werden.

Durch das Anlegen einer Spannung, sodass an dem Stator 24 und an dem Läufer 25 jeweils Magnetfelder vorliegen, wird der Läufer 25 in eine Richtung beschleunigt. Jede Stromrichtung treibt den Läufer 25 dabei in eine bestimmte Richtung an. Durch Wechseln der Stromrichtung am Stator 24 oder am Läufer 25 wird der Läufer 25 in die entgegensetzte Richtung beschleunigt. Mittels eines ständigen Wechsels der Stromrichtung oszilliert der Läufer 25. Eine Oszillationsfrequenz der Fördervorrichtung 19 ist somit unter anderem abhängig von einer Frequenz, mit der die Stromrichtung des Wechselstroms invertiert wird. Durch Änderung der Stromstärke kann hingegen eine Oszillationsgeschwindigkeit und/oder eine Oszillationsamplitude verändert werden. Hierzu kann die Steuereinheit 29 die Wechselspannungsquelle 33 ansteuern.

Des Weiteren sind vorzugsweise beidseitig am Läufer 20 Rückstellfedern 36 angebracht. Die Rückstellfedern 36 dienen der Unterstützung der Oszillation des Läufers 25. Der Läufer 25 weist durch die Rückstellfedern 36 eine Ruheposition auf, bei der sich die Kräfte der gegenüberliegenden Rückstellfedern 36 ausgleichen. Bei Auslenkung aus der Ruheposition wirkt somit stets eine entgegengesetzt wirkende Kraft auf den Läufer 25, die in Richtung der Ruheposition weist. Zudem können die Rückstellfedern 36 eine Oszillationsamplitude des Läufers 25 in beiden Oszillationsrichtungen begrenzen. Die Rückstellfedern 36 können als Schraubenfedern, Blattfedern oder andere Federtypen oder Dämpfungssysteme ausgebildet sein.

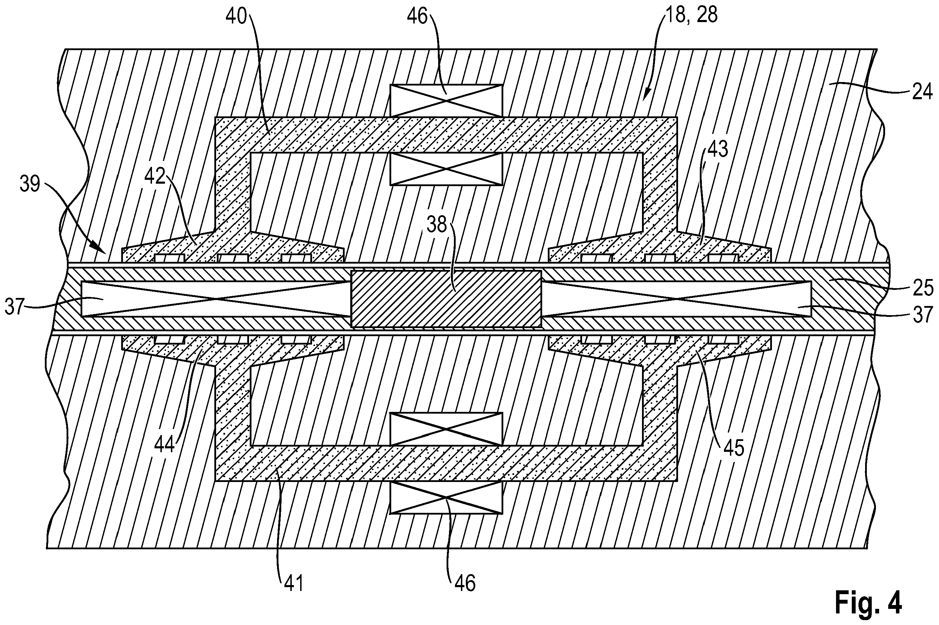

Die Darstellung in Fig. 4 zeigt eine Schnittansicht durch das als Elektromotor 28 ausgeführte Antriebsmittel 18. Der Schnitt durch den Elektromotor 28 verläuft entlang einer vertikalen Schnittebene. Der Stator 24 des Elektromotor 28 ist durch über und unter einer Spule 37 und dem Eisenkern 38 angeordnete Magnetjoche 40, 41 gebildet. Die Magnetjoche 40, 41 erstrecken sich hier paarweise oberhalb und unterhalb eines Kanals 39, in dem der Läufer 25 horizontal linear beweglich geführt ist. Denkbar wäre aber auch ein Aufbau, bei dem jeweils nur ein Magnetjoch oberhalb oder unterhalb des Kanals 39 mit dem Läufer 25 interagiert. Die Joche 40, 41 haben im Wesentlichen C-förmige Bügel, die an ihren Enden je zwei dem Kanal 39 zugewandte Polschuhe 42, 43 bzw. 44, 45 tragen. Die Polschuhe eines Paars, 42 und 44 bzw. 43 und 45, liegen einander paarweise gegenüber, um im Spalt zwischen Stator 24 und Läufer 25 ein senkrecht zu dem Kanal 39 orientiertes Magnetfeld zu erzeugen.

Um einen zentralen Abschnitt der Bügel der Magnetjoche 40, 41 herum sind Spulen 46 angeordnet. Die Spulen 46 sind parallel oder in Reihe so verschaltet, dass sie wenn Strom führend, zusammen ein im Uhrzeiger- oder Gegenuhrzeigersinn orientiertes Magnetfeld in den Magnetjochen 40, 41 ausbilden. Betrachtet man die vertikale Schnittebene aus Fig. 3 so ist das sich zwischen dem Paar von sich gegenüberliegenden Polschuhen 42, 44 ausbildende Magnetfeld zu dem Feld zwischen dem Paar von Polschuhen 43, 45 entgegengesetzt.

Eine Achse der Spule 37 ist parallel zu den im Kanal 39 zwischen den Polschuhen 42, 44 bzw. 43, 45 erzeugten Magnetfeldern orientiert, so dass zwischen den Spulen 37, 46 wirkende Magnetkräfte in Richtung des Kanals 39 wirken.

Wenn gleichzeitig mit den Spulen 46 auch die Spule 37 bestromt ist, dann ist die Stromrichtung in ihren zwischen den Polschuhen 42, 44 befindlichen Leitungsadern entgegengesetzt zu derjenigen der Leitungsadern zwischen den Polschuhen 43, 45, so dass auf die in den Leitungsadern fließenden Elektronen eine Lorentzkraft in jeweils gleicher Richtung wirkt und den Läufer 25 seitwärts auslenkt. Wenn der Läufer 25 sich ausgehend von der in Fig. 3 gezeigten Stellung nach links bewegt, nimmt die antreibende Lorentzkraft in dem Maße ab, in dem sich die Leitungsadern aus den Zwischenräumen zwischen den Polschuhpaaren 42, 44 bzw. 43, 45 herausbewegen, während die Rückstellkraft der Rückstellfedern 36 und, mit Annäherung der Leitungsadern an das Polschuhpaar 42, 44 auch eine nach rechts gerichtete Lorentzkraft zunehmen.

Wenn die Stromrichtung entweder in den Spulen 46 oder in der Spule 37 invertiert wird, kehrt sich die Richtung der Lorentzkraft um, und der Läufer 25 wird nach rechts beschleunigt. Durch periodisches Invertieren der Stromrichtung wird eine Oszillation des Läufers 25 hervorgerufen, die auf den daran angelenkten Rahmen 20 übertragen wird.

Mittels der Stelleinheit 27 und des einprägenden Stromes ist die Wurfhöhe, die Wurfweite und die Schwingfrequenz frei vorgebbar. Die Steuereinheit 29 ist zur paarweisen Ansteuerung der an jeweils einer Seite des Rahmens 20 angeordneten Stelleinheiten 27 und Elektromotoren 28 eingerichtet. Weiterhin kann die Steuereinheit 29 dazu eingerichtet sein, auch die Elektromotoren 28, welche die jeweiligen Rahmen von weiteren Fördervorrichtungen 19, d.h. dem Vorbereitungsboden 7 und/oder dem Rücklaufboden 9, oszillierend antreiben, fördervorrichtungsspezifisch und unabhängig voneinander anzusteuern.

Gemäß einer bevorzugten Weiterbildung können die paarweise an dem Rahmen 20 angeordneten Elektromotoren 28 um eine zu der Längsachse 22 der Fördervorrichtung 19 parallel verlaufende Schwenkachse verlagerbar sein. Durch den Anteil der Schwingungen, die quer zur Fahrrichtung verlaufen, kann eine Neigung des Mähdreschers 1 bezüglich seiner Längsachse, wie sie bei einer Hangfahrt auftreten kann, kompensiert werden. Dabei kann zur Verlagerung der Position der Elektromotoren 28 relativ zum Maschinenrahmen 17 eine Aktuatorik vorgesehen sein. Die Aktuatorik kann hydraulisch, pneumatisch oder elektrisch betätigbar sein.

### Bezugszeichenliste

| | | | |
|---|---|---|---|
| 1 | Mähdrescher | 31 | Lagerstelle |
| 2 | Schrägförderer | 32 | Generator |
| 3 | Erntegut | 33 | Wechselspannungsquelle |
| 4 | Vorsatzgerät | 34 | Phase |
| 5 | Dreschwerk | 35 | Phase |
| 6 | Dreschkorb | 36 | Rückstellfeder |
| 7 | Vorbereitungsboden | 37 | Spule |
| 8 | Abscheidevorrichtung | 38 | Eisenkern |
| 9 | Rücklaufboden | 39 | Kanal |
| 10 | Obersieb | 40 | Magnetjoch |
| 11 | Untersieb | 41 | Magnetjoch |
| 12 | Reinigungsvorrichtung | 42 | Polschuh |
| 13 | Förderschnecke | 43 | Polschuh |
| 14 | Gebläse | 44 | Polschuh |
| 15 | Korntank | 45 | Polschuh |
| 16 | Häcksel- und Verteilvorrichtung | 46 | Spule |
| 17 | Maschinenrahmen | | |
| 18 | Antriebsmittel | FR | Fahrtrichtung |
| 19 | Fördervorrichtung | | |
| 20 | Rahmen | | |
| 21 | Förderebene | | |
| 22 | Längsachse | | |
| 23 | Drehachse | | |
| 24 | Stator | | |
| 25 | Läufer | | |
| 26 | Achse | | |
| 27 | Stelleinheit | | |
| 28 | Elektromotor | | |
| 29 | Steuereinheit | | |
| 30 | Bussystem | | |

## Patentansprüche

1. Mähdrescher (1), mit zumindest einer oszillierend angetriebenen Fördervorrichtung (19), welche einen Rahmen (20), in dem zumindest eine im Wesentlichen flächige Förderebene (21) angeordnet ist, umfasst, wobei der Rahmen (20) am Maschinenrahmen (17) des Mähdreschers (1) aufgehängt und durch wenigstens ein Antriebsmittel (18) oszillierend angetriebenen ist, wobei das Antriebsmittel (18) als zumindest ein Elektromotor (28) mit einstellbarer variabler Frequenz ausgeführt ist, wobei der Rahmen (20) an einem Läufer (25) des zumindest einen Elektromotors (28) um eine Achse (26) drehbar angeordnet ist, wobei der Läufer (25) eine oszillierende Linearbewegung ausführt, wobei zur Ansteuerung des zumindest einen Elektromotors (28) eine Steuereinheit (29) vorgesehen ist, und wobei der zumindest eine Elektromotor (28) jeweils einen Stator (24) aufweist, **dadurch gekennzeichnet, dass** an dem Stator (24) oder einem den Stator (24) umgebenden Motorgehäuse eine Stelleinheit (27) angreift, welche dazu eingerichtet ist, den zumindest einen Elektromotor (28) relativ zum Maschinenrahmen (17) um eine Drehachse (23) zu drehen.

2. Mähdrescher (1) nach Anspruch 1, **dadurch gekennzeichnet, dass** die Steuereinheit (29) zur Ansteuerung des zumindest einen von wenigstens einer Wechselspannungsquelle (33) gespeisten Elektromotors (28) in Abhängigkeit von Frequenz und/oder Amplitude eingerichtet ist.

3. Mähdrescher (1) nach Anspruch 1 oder 2, **dadurch gekennzeichnet, dass** der Läufer (25) in einem Kanal (39) geführt ist und dass ein Stator (24) des Elektromotors (28) wenigstens ein Paar Polschuhe (42, 44; 43, 45) umfasst, die einander an zwei Seiten des Kanals (39) orthogonal zur Bewegungsrichtung des Läufers (25) gegenüberliegen.

4. Mähdrescher (1) nach einem der Ansprüche 1 bis 3, **dadurch gekennzeichnet, dass** der Läufer (25) wenigstens eine Spule (37) umfasst, deren Achse parallel zu einem zwischen den Polschuhen (42, 44; 43, 45) bestehenden Magnetfeld ausgerichtet ist.

5. Mähdrescher (1) nach einem der Ansprüche 1 bis 4, **dadurch gekennzeichnet, dass** der zumindest eine Elektromotor (28) relativ zum Rahmen (20) um die Drehachse (23) drehbar am Maschinenrahmen (17) gelagert ist.

6. Mähdrescher (1) nach Anspruch 5, **dadurch gekennzeichnet, dass** die Drehachse (23) im Wesentlichen orthogonal zum Maschinenrahmen (17) und quer zur Fahrrichtung (FR) des Mähdreschers (1) orientiert ist.

7. Mähdrescher (1) nach einem der vorangehenden Ansprüche, **dadurch gekennzeichnet, dass** an dem Rahmen (20) der zumindest einen Fördervorrichtung (19) beidseitig jeweils zwei Elektromotoren (28) angeordnet sind.

8. Mähdrescher (1) nach Anspruch 5 oder 6, **dadurch gekennzeichnet, dass** die paarweise an dem Rahmen (20) angeordneten Elektromotoren (28) um eine zur Fahrtrichtung (FR) parallel verlaufende Schwenkachse verlagerbar sind.

9. Mähdrescher (1) nach Anspruch 7, **dadurch gekennzeichnet, dass** zur Verlagerung der Position der Elektromotoren (28) relativ zum Maschinenrahmen (17) eine Aktuatorik vorgesehen ist.

10. Mähdrescher (1) nach einem der Ansprüche 7 bis 9, **dadurch gekennzeichnet, dass** die Steuereinheit (29) zur paarweisen Ansteuerung der an jeweils einer Seite des Rahmens (20) angeordneten Elektromotoren (28) eingerichtet ist.

11. Mähdrescher (1) nach einem der vorangehenden Ansprüche, **dadurch gekennzeichnet, dass** die Steuereinheit (29) dazu eingerichtet ist, Elektromotoren (28), welche die jeweiligen Rahmen (20) von verschiedenen Fördervorrichtungen (19) oszillierend antreiben, fördervorrichtungsspezifisch und unabhängig voneinander anzusteuern.

12. Mähdrescher (1) nach einem der vorangehenden Ansprüche, **dadurch gekennzeichnet, dass** die zumindest eine Fördervorrichtung (19) als Vorbereitungsboden (7), als Rücklaufboden (9) und/oder als Sieb (10, 11) einer Reinigungsanordnung (12) ausgeführt ist.

13. Verfahren zum Betreiben eines Mähdrescher (1) mit zumindest einer oszillierend angetriebenen Fördervorrichtung (19), welche einen Rahmen (20), in dem zumindest eine im Wesentlichen flächige Förderebene (21) angeordnet ist, umfasst, wobei der Rahmen (20) pendelnd am Maschinenrahmen (17) aufgehängt und durch Antriebsmittel (18) oszillierend angetriebenen wird, wobei der Rahmen (20) von zumindest einem als Elektromotor (28) ausgeführten Antriebsmittel (18) mit einstellbarer Frequenz in Schwingung versetzt wird, wobei der Elektromotor (28) durch eine Steuereinheit (29) angesteuert wird, **dadurch gekennzeichnet, dass** der Elektromotor (28) durch eine Stelleinheit (27) um eine Drehachse (23) geschwenkt wird.

14. Verfahren nach Anspruch 13, **dadurch gekennzeichnet, dass** der Rahmen (20) von einem an dem Rahmen (20) schwenkbar angelenkten Läufer (25) des zumindest einen Elektromotors (28) in Schwingung versetzt wird.

## Claims

1. A combine harvester (1), with at least one conveying device (19) which is driven in oscillation, which comprises a frame (20) in which at least one substantially planar conveying stage (21) is disposed, wherein the frame (20) is suspended on the machine frame (17) of the combine harvester (1) and is driven in oscillation by at least one drive means (18), wherein the drive means (18) is configured as at least one electric motor (28) with an adjustable variable frequency, wherein the frame (20) is rotatably disposed about an axis (26) on a runner (25) of the at least one electric motor (28), wherein the runner (25) executes an oscillating linear movement, wherein a control unit (29) is provided in order to control the at least one electric motor (28), and wherein the at least one electric motor (28) has a respective stator (24), **characterized in that** a positioning unit (27) which is configured so as to turn the at least one electric motor (28) relative to the machine frame (17) about an axis of rotation (23) engages on the stator (24) or on a motor housing surrounding the stator (24).

2. The combine harvester (1) according to claim 1, **characterized in that** the control unit (29) is configured to control the at least one electric motor (28) supplied from at least one AC voltage source as a function of frequency and/or amplitude.

3. The combine harvester (1) according to claim 1 or claim 2, **characterized in that** the runner (25) is guided in a channel (39) and **in that** a stator (24) of the electric motor (28) comprises at least one pair of pole pieces (42, 44; 43, 45) which lie opposite one another on two sides of the channel (39) orthogonally to the direction of movement of the runner (25).

4. The combine harvester (1) according to one of claims 1 to 3, **characterized in that** the runner (25) comprises at least one coil (37) the axis of which is orientated parallel to a magnetic field existing between the pole pieces (42, 44; 43, 45).

5. The combine harvester (1) according to one of claims 1 to 4, **characterized in that** the at least one electric motor (28) is mounted on the machine frame (17) for rotation about the axis of rotation (23) relative to the frame (20).

6. The combine harvester (1) according to claim 5, **characterized in that** the axis of rotation (23) is orientated substantially orthogonally to the machine frame (17) and transversely to the direction of travel (FR) of the combine harvester (1).

7. The combine harvester (1) according to one of the preceding claims, **characterized in that** two electric motors (28) are respectively disposed on both sides of the frame (20) of the at least one conveying device (19).

8. The combine harvester (1) according to claim 5 or claim 6, **characterized in that** the electric motors (28) disposed in pairs on the frame (20) can be displaced about a pivot axis which runs parallel to the direction of travel (FR).

9. The combine harvester (1) according to claim 7, **characterized in that** an actuator system is provided in order to displace the position of the electric motors (28) relative to the machine frame (17).

10. The combine harvester (1) according to one of claims 7 to 9, **characterized in that** the control unit (29) is configured to control the electric motors (28) disposed on a respective side of the frame (20) in pairs.

11. The combine harvester (1) according to one of the preceding claims, **characterized in that** the control unit (29) is configured to control electric motors (28) which drive the respective frames (20) of different conveying devices (19) in oscillation, in a manner which is specific to the conveying device and independently of one another.

12. The combine harvester (1) according to one of the preceding claims, **characterized in that** the at least one conveying device (19) is configured as a grain pan (7), as a returns pan (9) and/or as a sieve (10, 11) of a cleaning assembly (12).

13. A method for operating a combine harvester (1) with at least one conveying device (19) which is driven in oscillation, which comprises a frame (20) in which at least one substantially planar conveying stage (21) is disposed, wherein the frame (20) is suspended for oscillation on the machine frame (17) and is driven in oscillation by drive means (18), wherein the frame (20) is set into oscillation at an adjustable frequency by at least one drive means (18) configured as an electric motor (28), wherein the electric motor (28) is controlled by a control unit (29), **characterized in that** the electric motor is pivoted about an axis of rotation (23) by a positioning unit (27).

14. The method according to claim 13, **characterized in that** the frame (20) is set into oscillation by a runner (25) of the at least one electric motor (28) which is pivotably mounted on the frame (20).

## Revendications

1. Moissonneuse-batteuse (1) comprenant au moins un dispositif de convoyage entraîné de manière oscillante (19) qui inclut un bâti (20) dans lequel est disposé au moins un plan de convoyage sensiblement plat (21), le bâti (20) étant accroché au bâti de machine (17) de la moissonneuse-batteuse (1) et entraîné de manière oscillante par l'intermédiaire d'au moins un moyen d'entraînement (18), le moyen d'entraînement (18) étant conformé en au moins un moteur électrique (28) avec une fréquence variable réglable, le bâti (20) étant monté tournant autour d'un axe (26) sur un induit (25) du au moins un moteur électrique (28), l'induit (25) effectuant un mouvement linéaire oscillant, pour la commande du au moins un moteur électrique (28) étant prévue une unité de commande (29), et au moins un moteur électrique (28) comportant respectivement un stator (24), **caractérisée en ce que** sur le stator (24)ou sur un carter de moteur entourant le stator (24) agit une unité de réglage (27) qui est agencée pour tourner le au moins un moteur électrique (28) autour d'un axe de rotation (23) par rapport au bâti de machine (17).

2. Moissonneuse-batteuse (1) selon la revendication 1, **caractérisée en ce que** l'unité de commande (29) est agencée pour commander le au moins un moteur électrique (28), alimenté par au moins une source de tension alternative (33) ; en fonction d'une fréquence et/ou d'une amplitude.

3. Moissonneuse-batteuse (1) selon la revendication 1 ou 2, **caractérisée en ce que** l'induit (25) est guidé dans un canal (39) et **en ce qu'**un stator (24) du moteur électrique (28) inclut au moins une paire de pièces polaires (42, 44 ; 43, 45) qui se font mutuellement face sur deux côtés du canal (39) orthogonalement à la direction de déplacement de l'induit (25).

4. Moissonneuse-batteuse (1) selon une des revendications 1 à 3, **caractérisée en ce que** l'induit (25) inclut au moins une bobine (37) dont l'axe est orienté parallèlement à un champ magnétique existant entre les pièces polaires (42, 44 ; 43, 45).

5. Moissonneuse-batteuse (1) selon une des revendications 1 à 4, **caractérisée en ce que** le au moins un moteur électrique (28) est monté sur le bâti de machine (17) de manière tournant par rapport au bâti (20) autour de l'axe de rotation (23) .

6. Moissonneuse-batteuse (1) selon la revendication 5, **caractérisée en ce que** l'axe de rotation (23) est orienté sensiblement orthogonalement au bâti de machine (17) et transversalement au sens de marche (FR) de la moissonneuse-batteuse (1).

7. Moissonneuse-batteuse (1) selon une des revendications précédentes, **caractérisée en ce que** sur le bâti (20) du au moins un dispositif de convoyage (19) sont disposés des deux côtés respectivement deux moteurs électriques (28).

8. Moissonneuse-batteuse (1) selon la revendication 5 ou 6, **caractérisée en ce que** les moteurs électriques (28) disposés par paires sur le bâti (20) sont déplaçables autour d'un axe de pivotement s'étendant parallèlement au sens de marche (FR).

9. Moissonneuse-batteuse (1) selon la revendication 7, **caractérisée en ce que** pour le déplacement de la position des moteurs électriques (28) par rapport au bâti de machine (17) est prévu un ensemble actionneur.

10. Moissonneuse-batteuse (1) selon une des revendications 7 à 9, **caractérisée en ce que** l'unité de commande (29) est agencée pour la commande par paires des moteurs électriques (28) disposés sur respectivement un côté du bâti (20).

11. Moissonneuse-batteuse (1) selon une des revendications précédentes, **caractérisée en ce que** l'unité de commande (29) est agencée pour commander les moteurs électriques (28), lesquels entraînent de manière oscillante les bâtis respectifs (20) de différents dispositifs de convoyage (19), de manière spécifique aux dispositifs de convoyage et indépendamment les uns des autres.

12. Moissonneuse-batteuse (1) selon une des revendications précédentes, **caractérisée en ce que** le au moins un dispositif de convoyage (19) est conformé en table de préparation (7), en table de retour (9) et/ou en grille (10, 11) d'un agencement de nettoyage (12).

13. Procédé de fonctionnement d'une moissonneuse-batteuse (1) comprenant au moins un dispositif de convoyage entraîné de manière oscillante (19) qui inclut un bâti (20) dans lequel est disposé au moins un plan de convoyage sensiblement plat (21), le bâti (20) étant accroché de manière pendulaire au bâti de machine (17) et entraîné de manière oscillante par l'intermédiaire de moyens d'entraînement (18), le bâti (20) étant mis en oscillation avec une fréquence réglable par au moins un moyen d'entraînement (18) conformé en moteur électrique (28), le moteur électrique (28) étant commandé par l'intermédiaire d'une unité de commande (29), **caractérisé en ce que** le moteur électrique (28) est pivoté autour d'un axe de rotation (23) par l'intermédiaire d'une unité de réglage (27).

14. Procédé selon la revendication 13, **caractérisé en ce que** le bâti (20) est mis en oscillation par un induit (25), articulé de manière pivotante sur le bâti (20), du au moins un moteur électrique (28).
